# FASCICULE DE BREVET EUROPEEN

(11) **EP 2 308 068 B1**
(45) Date de publication et mention de la délivrance du brevet: **22.08.2012**
(21) Numéro de dépôt: 09804592.5
(22) Date de dépôt: 15.06.2009
(51) Int. Cl.: H01H 9/02, H02K 7/18

(54) **DISPOSITIF ET PROCEDE DE TELECOMMANDE POUR INTERRUPTEUR EQUIPE D'UN GENERATEUR ROTATIF ET INTERRUPTEUR DOTE D'UN TEL DISPOSITIF**
FERNSTEUERUNGSVORRICHTUNG UND -VERFAHREN FÜR EINEN SCHALTER MIT EINEM DREHGENERATOR SOWIE MIT EINER SOLCHEN VORRICHTUNG AUSGESTATTETER SCHALTER
REMOTE CONTROL DEVICE AND METHOD FOR A SWITCH COMPRISING A ROTARY GENERATOR, AND SWITCH PROVIDED WITH SUCH A DEVICE

(30) Priorité: 04.08.2008 FR 0804431
(43) Date de publication de la demande: 13.04.2011
(73) Titulaire: Schneider Electric Industries SAS, 92500 Rueil-Malmaison (FR)
(72) Inventeur: CARTIER MILLON, Christophe, F38400 Saint Martin D'heres (FR); VIGOUROUX, Didier, F-38190 Brignoud (FR)
(74) Mandataire: Picard, Laurent
(86) Numéro de dépôt international: PCT/FR2009/000708
(87) Numéro de publication internationale: WO 2010/015729

(56) Documents cités:
- EP-A- 1 324 468
- WO-A-01/67580

## Description

### DOMAINE TECHNIQUE DE L'INVENTION

L'invention relève du domaine des dispositifs de télécommande pour interrupteur comportant un générateur rotatif couplé à un organe de commande dudit dispositif par l'intermédiaire d'un mécanisme de couplage afin de transformer l'énergie mécanique générée lors de l'actionnement de l'organe de commande en énergie électrique.

Plus précisément, l'invention concerne un dispositif de télécommande pour interrupteur comportant :
- un organe de commande mobile monté rotatif autour d'un axe de commande et pouvant être actionné dans au moins deux positions de commutation,
- un générateur d'électricité équipé d'un stator et d'un rotor montés de façon coaxiale autour d'un axe du générateur,
- un circuit électrique couplé au générateur pour produire un signal électrique de télécommande, et
- un mécanisme de couplage entre l'organe de commande et le rotor pour transformer le mouvement de l'organe de commande en rotation du rotor.

### ÉTAT DE LA TECHNIQUE

L'utilisation de générateurs d'électricité dans les dispositifs de télécommande pour interrupteur permet de disposer d'une énergie électrique lors de l'actionnement de l'organe de commande. Cette énergie peut être utilisée pour la transmission télécommandée d'un ordre de commande d'actionnement ou d'une information, par exemple sur l'état de l'interrupteur. Par exemple, les générateurs peuvent être utilisés dans des interrupteurs mobiles afin de commander à distance des moyens de commutation déportés.

Il est connu d'utiliser des générateurs de type rotatif dans les dispositifs de télécommande pour interrupteur afin de convertir l'énergie mécanique induite par l'actionnement de l'organe de commande en énergie électrique. Cette conversion est généralement réalisée par l'entremise d'un mécanisme de couplage permettant de transformer le mouvement de l'organe de commande en rotation d'un rotor du générateur.

Un tel dispositif de télécommande pour interrupteur comportant un générateur rotatif est connu de la demande internationale WO01/67580. L'interrupteur électrique décrit dans cette demande comporte un organe de commande mobile, un générateur rotatif, un circuit électrique couplé au générateur pour produire un signal électrique de télécommande, et un mécanisme de transmission utilisant l'énergie dérivée du mouvement de l'organe de commande pour actionner un rotor dudit générateur rotatif afin de produire de l'électricité. Le mécanisme de transmission de l'interrupteur électrique comporte des engrenages complexes et sensibles à toute incursion de corps étranger, et nécessite souvent d'être isolé de l'environnement extérieur.

### EXPOSÉ DE L'INVENTION

L'invention vise à remédier aux problèmes techniques des dispositifs de télécommande pour interrupteur de l'art antérieur en proposant un dispositif de télécommande pour interrupteur comportant :
- un organe de commande mobile monté rotatif autour d'un axe de commande et pouvant être actionné dans au moins deux positions de commutation,
- un générateur d'électricité équipé d'un stator et d'un rotor montés de façon coaxiale autour d'un axe du générateur,
- un circuit électrique couplé au générateur pour produire un signal électrique de télécommande, et
- un mécanisme de couplage entre l'organe de commande et le rotor pour transformer le mouvement de l'organe de commande en rotation du rotor.

Le dispositif de télécommande selon l'invention étant caractérisé en ce qu'il comporte en outre des premiers moyens de rappel permettant de contraindre le rotor dans une position de repos, et en ce que le mécanisme de couplage comporte au moins un élément d'accrochage et une barre d'entrainement présentant une première et une seconde extrémité, la première extrémité de la barre d'entraînement et l'élément d'accrochage étant respectivement couplés au rotor et à l'organe de commande ou inversement, l'élément d'accrochage coopérant avec la seconde extrémité de la barre d'entrainement de sorte que, lors de l'actionnement de l'organe de commande entre deux positions de commutation, l'élément d'accrochage et la seconde extrémité de la barre d'entrainement sont successivement accrochés, entrainés par l'organe de commande et décrochés, en générant ainsi une rotation du rotor dans un sens et dans l'autre.

De préférence, le générateur d'électricité est une machine à flux transverse.

De préférence, la première extrémité de la barre d'entrainement et l'élément d'accrochage sont respectivement couplés au rotor et à l'organe de commande.

De préférence, les premiers moyens de rappel permettant de contraindre le rotor dans une position de repos comportent deux ressorts, chaque ressort présentant deux extrémités, une extrémité de chaque ressort étant accrochée à une partie solidaire du rotor, les deux autres extrémités desdits ressorts étant accrochées sur une partie fixe du dispositif.

De préférence, la barre d'entrainement est une lame ressort. Avantageusement, l'élément d'accrochage est un ergot permettant un accrochage de la seconde extrémité de la barre d'entrainement par appui de celle-ci sur un côté de l'ergot.

Selon un mode de réalisation particulier, le mécanisme de couplage comporte une pièce de liaison montée rotative par rapport à l'axe de commande et présentant une première et une seconde face latérale, la première face latérale portant l'organe de commande, la seconde face latérale portant l'ergot disposé à distance par rapport à l'axe de commande, l'ergot et la seconde extrémité de la lame ressort étant disposés de sorte que, lors de l'actionnement de l'organe de commande entre deux positions de commutation, la seconde extrémité de la lame ressort est successivement en butée avec l'ergot, entraînée par ledit ergot et l'organe de commande, et désengagée de l'ergot, en générant ainsi une rotation du rotor dans un sens et dans l'autre.

Avantageusement, dans ce mode de réalisation, l'organe de commande est monté basculant entre deux positions de commutation. De préférence, le dispositif comporte des seconds moyens de rappel de l'organe de commande dans une position de repos dudit organe.

Alternativement, dans ce mode de réalisation, l'axe de commande est sensiblement confondu avec l'axe du générateur d'électricité. De préférence, l'organe de commande peut être actionné dans plus de deux positions de commutation, et en ce que la seconde face latérale de la pièce de liaison comporte une pluralité d'ergots disposés sur un arc de cercle concentrique par rapport à l'axe de commande, chaque ergot coopérant avec la seconde extrémité de la barre d'entrainement lors de l'actionnement de l'organe de commande entre deux positions de commutation déterminées.

L'invention concerne également un interrupteur comportant au moins un contact mobile et un dispositif de télécommande pour actionner ledit interrupteur, ledit interrupteur étant caractérisé en ce que le dispositif de télécommande est tel que décrit précédemment, ledit contact mobile étant actionné à distance par ledit dispositif de télécommande.

L'invention concerne également un procédé de télécommande pour interrupteur comportant :
- l'actionnement en rotation d'un organe de commande mobile par rapport à un axe de commande entre au moins deux positions de commutation,
- l'entrainement d'un rotor d'un générateur d'électricité autour d'un axe dudit générateur par l'organe de commande,
- la génération d'électricité sur un stator dudit générateur, et
- la production d'un signal électrique de télécommande à partir de ladite électricité.

Le procédé selon l'invention est caractérisé en ce qu'il comporte le rappel du rotor dans une position de repos, et en ce que l'entrainement du rotor par l'organe de commande est réalisé par l'entremise d'une barre d'entraînement présentant une première et une seconde extrémité et un élément d'accrochage, ledit entrainement du rotor comportant, lorsque l'organe de commande est actionné entre deux positions de commutation, l'accrochage de la seconde extrémité et de l'élément d'accrochage, l'entrainement de la seconde extrémité et de l'élément d'accrochage par l'organe de commande et le décrochage de la seconde extrémité et de l'élément d'accrochage, en générant ainsi une rotation du rotor dans un sens et dans l'autre.

### BRÈVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.
La figure 1 représente de façon schématique les principaux éléments d'un interrupteur comportant un dispositif de télécommande et un dispositif de commutation.
La figure 2 représente un dispositif de télécommande pour interrupteur selon un premier mode de réalisation.
La figure 3 est une vue en coupe du dispositif de télécommande pour interrupteur représenté à la figure 2.
La figure 4 est une vue d'ensemble du dispositif de télécommande pour interrupteur représenté à la figure 2
La figure 5 représente un dispositif de télécommande pour interrupteur selon un second mode de réalisation dans une variante où l'organe de commande est manoeuvrable entre deux positions.
La figure 6, est une vue de dessus du dispositif de télécommande pour interrupteur représenté à la figure 5.
La figure 7 représente une pièce de liaison utilisée dans une seconde variante du dispositif de télécommande selon le second mode de réalisation, dans laquelle l'organe de commande est manoeuvrable entre quatre positions.
La figure 8, est une vue de dessus du dispositif de télécommande pour interrupteur représenté à la figure 7.
La figure 9 représente les principales étapes du procédé de télécommande pour interrupteur selon l'invention.

### DESCRIPTION DETAILLEE D'UN MODE DE RÉALISATION

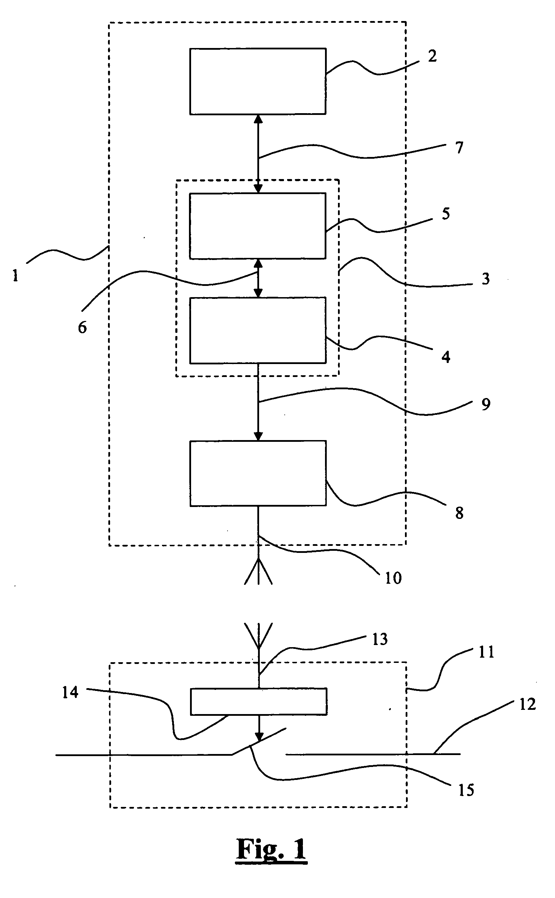

En référence à la figure 1, l'interrupteur représenté schématiquement comporte un dispositif de télécommande 1 et un dispositif de commutation 11 actionné par l'entremise du dispositif de télécommande. Le dispositif de télécommande 1 comporte un organe de commande mobile 2 et un générateur d'électricité 3 équipé d'un stator 4 et d'un rotor 5 montés de façon coaxiale et couplés par un entrefer 6. Le dispositif de télécommande comporte, en outre, un mécanisme de couplage 7 entre l'organe de commande et le rotor. Ce mécanisme de couplage permet de transformer le mouvement de l'organe de commande 2 en rotation du rotor 5. Le mouvement de l'organe de commande est généralement un mouvement de rotation par rapport à un axe de commande, par exemple un mouvement de basculement autour de cet axe entre deux positions de commutation. Dans la représentation de la figure 1, l'énergie électrique fournie par le générateur 3 est envoyée dans des moyens de traitement 8 par une ligne 9. Cette énergie permet de générer un signal de commande qui est envoyé au dispositif de commutation 11 à l'aide d'une antenne 10. De cette façon, la transmission du signal de commande de l'interrupteur est réalisée à l'aide d'une énergie électrique obtenue par transformation de l'énergie mécanique générée par l'actionnement de l'organe de commande. Ainsi, l'utilisation du dispositif de télécommande ne nécessite aucune source d'énergie externe et aucune batterie.

Comme cela est représenté à la figure 1, le dispositif de commutation 11 associé au dispositif de télécommande 1 est monté sur une ligne électrique 12. Le dispositif de commutation comporte des moyens de réception 13, en l'occurrence une antenne, permettant de recevoir le signal de commande issu du dispositif de télécommande 1. Les moyens de réception sont connectés à des moyens d'actionnement 14 couplés au contact mobile 15. Les moyens d'actionnement, tels que représentés à la figure 1, permettent ainsi de traiter le signal de commande pour actionner l'ouverture ou la fermeture du contact mobile 15.

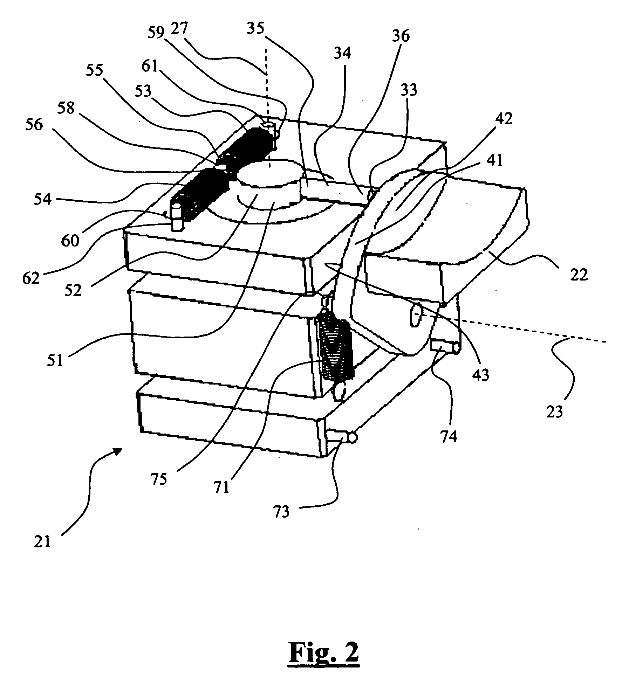

Dans le premier mode de réalisation représenté sur les figures 2 à 4, le dispositif de télécommande 21 comporte un organe de commande 22 représenté dans une position de repos. Cet organe de commande est monté rotatif autour d'un axe de commande 23. Plus précisément, l'organe de commande est monté basculant autour de l'axe de commande entre deux positions de commutation de part et d'autre de la position de repos. Le dispositif de télécommande 21 comporte également un générateur d'électricité équipé d'un stator 25 et d'un rotor 26 montés de façon coaxiale autour d'un axe du générateur 27.

Le dispositif de télécommande 21 comporte un mécanisme de couplage entre l'organe de commande 22 et le rotor 26 permettant de transformer le mouvement de basculement de l'organe de commande en rotation du rotor 26. Le mécanisme de couplage comporte au moins un élément d'accrochage 33 et une barre d'entrainement 34 présentant une première extrémité 35 et une seconde extrémité 36.

L'élément d'accrochage 33 est monté sur une pièce de liaison 41 présentant une première face latérale 42 et une seconde face latérale 43, la première face latérale portant l'organe de commande 22 et la seconde face latérale portant l'élément d'accrochage 33. L'élément d'accrochage 33 est monté sur la seconde face latérale à distance par rapport à l'axe de commande 23. De cette façon, lors du basculement de l'organe de commande autour de l'axe, l'élément d'accrochage 33 se déplace le long d'un arc de cercle autour de l'axe de commande 23.

La première extrémité 35 de la barre d'entrainement est, quant à elle, montée fixement sur le rotor 26 du générateur par l'entremise d'une partie solidaire dudit rotor, en l'occurrence, la pièce intermédiaire 51. La pièce intermédiaire 51 est elle-même montée rotative par rapport à l'axe 27 du générateur. En particulier, la première extrémité 35 de la barre d'entrainement est montée sur une surface latérale 52 de la pièce intermédiaire 51 présentant une symétrie de révolution par rapport à l'axe du générateur. La première extrémité 35 de la barre d'entrainement est montée sur la pièce intermédiaire de sorte que ladite barre soit orientée selon une direction radiale par rapport à l'axe du générateur.

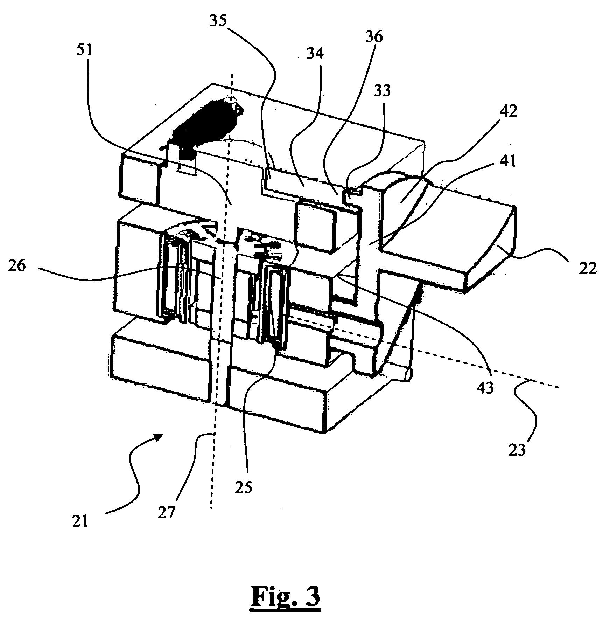

Des premiers moyens de rappel permettent de contraindre le rotor 26, et donc la pièce intermédiaire 51 solidaire dudit rotor, dans une position de repos, telle que représentée sur les figures 2 et 3. Ces moyens de rappel comportent deux ressorts 53, 54. Les extrémités 55, 56 de chaque ressort sont accrochées à la pièce intermédiaire 51 solidaire du rotor 26 par l'intermédiaire d'une patte commune 58. Les deux autres extrémités 59, 60 des ressorts 53, 54 sont, quant à eux accrochées sur une partie fixe du dispositif, à l'aide de deux pattes 61,62.

Le dispositif de télécommande 21 comporte, en outre, des seconds moyens de rappel de l'organe de commande 22 dans une position de repos dudit organe tel qu'il est représenté sur les figures 2 et 3. Dans le mode de réalisation représenté, ces moyens de rappel comprennent deux ressorts 71 fixés d'un côté à des points d'ancrage 73, 74 de la partie fixe et de l'autre côté à des points d'ancrage 75 de la pièce de liaison 41. Les ressorts 71 sont disposés pour interagir dans un sens opposé, en l'occurrence les points d'ancrage 75 et l'axe des ressorts 71 sont disposés de part et d'autre de l'axe de commande 23.

L'élément d'accrochage 33 et la seconde extrémité 36 de la barre d'entrainement 34 sont disposés de manière à interagir lors de l'actionnement de l'organe de commande entre deux positions de commutation. Les interactions entre l'élément d'accrochage et la seconde extrémité de la barre d'entrainement comportent un accrochage, un entrainement par l'organe de commande, et un décrochage. L'entrainement par l'organe de commande permet de faire tourner le rotor dans le sens d'entrainement et le décrochage consécutif permet de faire tourner le rotor dans l'autre sens grâce aux premiers moyens de rappel.

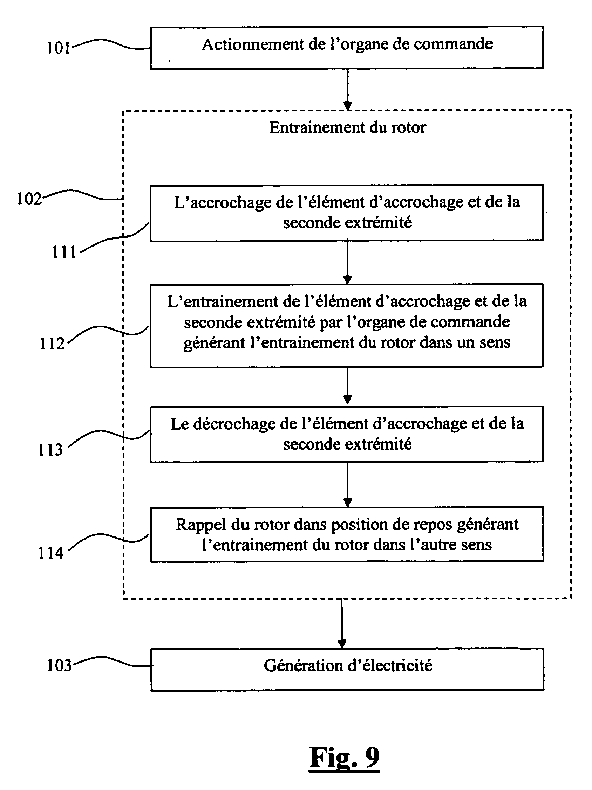

Comme cela est représenté à la figure 9, les étapes du procédé de télécommande comporte donc une étape d'actionnement 101 de l'organe de commande, une étape d'entraînement 102 du rotor, et une étape de génération d'électricité 103. Ces étapes sont mises en oeuvre simultanément pendant l'actionnement de l'organe de commande entre deux positions de commutation. L'étape d'entrainement 102 du rotor comporte successivement, lorsque l'organe de commande est actionné entre deux positions de commutation, l'accrochage 111 de la seconde extrémité et de l'élément d'accrochage, l'entrainement 112 de la seconde extrémité et de l'élément d'accrochage par l'organe de commande en générant ainsi la rotation du rotor dans un sens d'actionnement, le décrochage 113 de la seconde extrémité et de l'élément d'accrochage, et le rappel 114 du rotor dans une position de repos en générant ainsi une rotation du rotor dans l'autre sens.

L'élément d'accrochage peut être doté de moyens spécifiques permettant l'accrochage et le décrochage successifs lorsque l'organe de commande se déplace entre deux positions de commutation. Avantageusement, lors de l'actionnement de l'organe de commande entre deux positions de commutation, le déplacement de l'élément d'accrochage 33 et de la seconde extrémité 36 de la barre d'entrainement 34 peut suivre des chemins différents en permettant dans un premier stade, le rapprochement relatif de la seconde extrémité par rapport à l'élément d'accrochage, et, dans un deuxième stade l'éloignement relatif entre ces deux éléments. Ainsi, l'accrochage peut être obtenu par appui de l'élément d'accrochage 33 sur la seconde extrémité 36 lors du rapprochement de l'élément d'accrochage par rapport à la seconde extrémité, le décrochage étant, quant à lui, obtenu lors de l'éloignement de l'élément d'accrochage par rapport à la seconde extrémité. Comme cela est représenté sur les figures 2 à 8, l'élément d'accrochage 33 est de préférence un simple ergot venant s'appuyer sur une surface d'appui de la seconde extrémité 36 de la barre d'entrainement 34. Inversement, dans le cas non représenté où l'élément d'accrochage et la barre d'entrainement sont respectivement couplés au rotor et à l'organe de commande, c'est la seconde extrémité de la barre d'entraînement qui vient s'appuyer sur une surface d'appui de l'ergot.

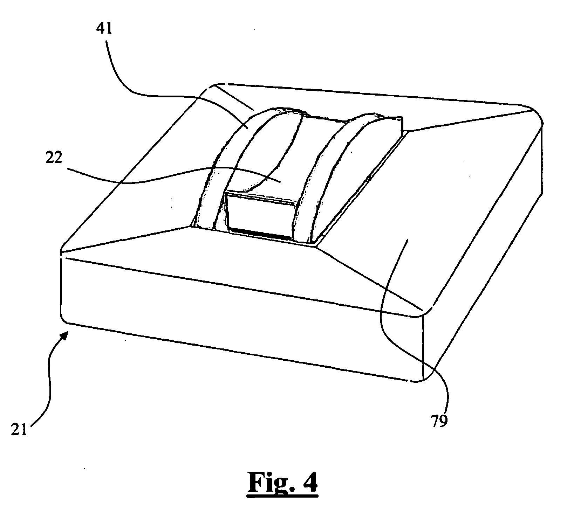

Comme cela est représenté à la figure 4, les différents éléments du dispositif de télécommande 2, à l'exception d'une partie accessible de l'organe de commande, peuvent être dissimulés sous un capot 79.

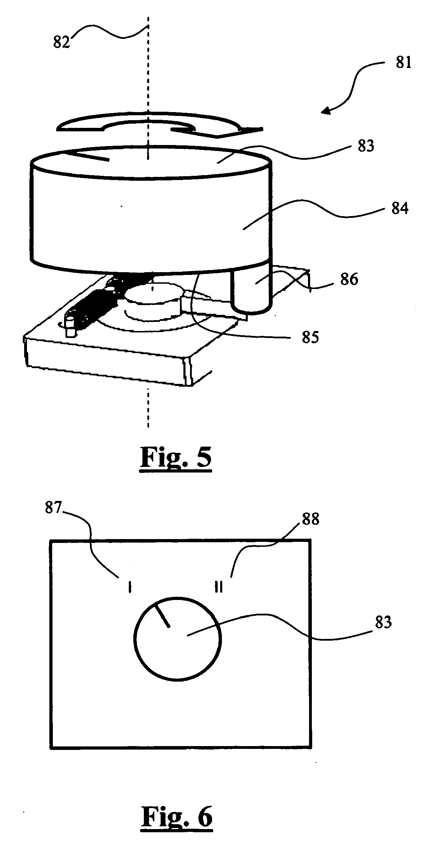

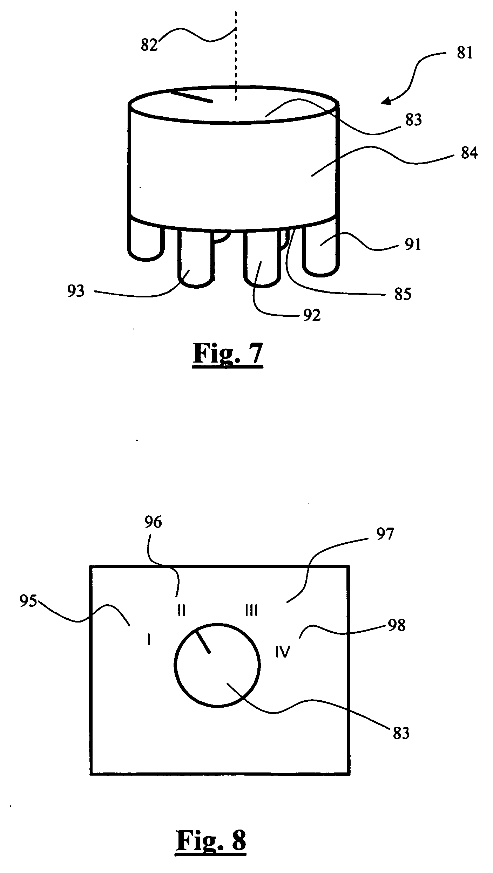

Dans les dispositifs de télécommande 81 représentés au moins en partie sur les figures 5 à 8, l'axe de commande est sensiblement confondu avec l'axe du générateur 82. L'organe de commande mobile 83 est monté de façon rotative par rapport à l'axe 82. L'organe de commande est solidaire d'une pièce de liaison 84. Comme cela est visible sur les figures 5 et 7, une première face latérale supérieure de la pièce de liaison porte l'organe de commande et une seconde face latérale inférieure 85 porte l'élément d'accrochage 86. Cet élément d'accrochage 86 est monté à distance par rapport à l'axe de commande 82. De cette façon, lors de la rotation de l'organe de commande autour de l'axe, l'élément d'accrochage 86 se déplace le long d'un arc de cercle autour de l'axe de commande.

Dans les dispositifs de télécommande 81 représentés au moins en partie sur les figures 5 à 8, le générateur d'électricité et le mécanisme de couplage entre l'organe de commande sont sensiblement identiques par rapport à ceux du premier mode de réalisation représentés sur les figures 2 et 3.

Dans la première variante du dispositif de télécommande 81 représenté sur les figures 5 et 6, la seconde face latérale 85 porte un seul élément d'accrochage, en l'occurrence un ergot 86. De la même façon que dans le premier mode de réalisation, l'ergot 86 et la seconde extrémité de la barre d'entraînement sont disposés de manière à interagir lors de la rotation de l'organe de commande entre deux positions de commutation 87, 88.

Comme cela est représenté à la figure 7, dans la seconde variante du dispositif de télécommande, la seconde face latérale 85 de la pièce de liaison 84 comporte une pluralité d'ergots 91, 92, 93 disposés sur un arc de cercle concentrique par rapport à l'axe de commande 82. Dans cette seconde variante, le dispositif de télécommande peut être actionné dans plus de deux positions de commutation, en l'occurrence dans quatre positions 95, 96, 97, 98. De la même façon que dans le premier mode de réalisation, chaque ergot est disposé par rapport à la seconde extrémité de la barre d'entrainement, de sorte que lors de l'actionnement de l'organe de commande entre deux positions de commutation déterminées, la seconde extrémité de la lame ressort est successivement en butée avec l'ergot, entraînée par ledit ergot et l'organe de commande, et désengagée de l'ergot, en générant ainsi une rotation du rotor dans un sens et dans l'autre. Le nombre d'ergot est généralement au moins égal au nombre de positions auquel est retranché l'unité. Ainsi, pour un organe de commande pouvant être manoeuvré dans quatre positions le nombre minimum d'ergots est de trois. Notons que lors de l'actionnement de l'organe de commande entre deux positions, la seconde extrémité de la lame ressort peut être successivement entraînée par une pluralité d'ergot, ce qui permet de multiplier le nombre d'aller et retour du rotor et de générer plus d'énergie électrique.

Comme cela est représenté sur les figures 2 à 8, la barre d'entrainement est de préférence une lame ressort. Ceci permet d'obtenir un décrochage entre l'élément d'accrochage 33, c'est-à-dire l'ergot, et la seconde extrémité 36 de lame ressort lorsque d'une part ces deux éléments sont suffisamment éloignés, mais aussi lorsque la force exercée par les premiers moyens de rappel est supérieure à la raideur de la lame ressort. Ainsi, il est possible de jouer sur la déformation de la lame ressort et d'envisager une étape d'entrainement entre l'accrochage et le décrochage plus longue, et donc une rotation du rotor d'amplitude plus importante. Le mécanisme de couplage permet ainsi une rotation du rotor sur un secteur compris entre 10° et 90°, de préférence entre 30° et 60°. Grâce à cette configuration, l'énergie électrique générée lors de la rotation du rotor dans chaque sens s'en trouve accrue.

Dans les modes de réalisation représentés sur les figures 2 à 8, la première extrémité 35 de la barre d'entrainement 34 et l'élément d'accrochage 33 sont respectivement couplés au rotor 26 et à l'organe de commande 22. Dans d'autres modes de réalisation non représentés, cette première extrémité et l'élément d'accrochage pourraient être respectivement couplés à l'organe de commande et au rotor.

Dans les modes de réalisation représentés sur les figures 2 à 8, la première extrémité 35 de la barre d'entraînement, c'est-à-dire de la lame ressort, est couplée solidairement au rotor 26 du générateur. Dans d'autres modes de réalisation, cette première extrémité de la barre d'entrainement pourrait être couplée au rotor par des moyens de couplage mobile. De tels moyens de couplage mobile pourraient, par exemple, inclure des moyens d'entrainement de la barre d'entrainement en rotation permettant de déplacer la seconde extrémité de la barre d'entrainement selon un arc de cercle. Ils pourraient alternativement comporter des moyens d'entrainement en translation de la seconde extrémité 36 selon un axe perpendiculaire à la dimension principale de la barre d'entrainement.

Dans les modes de réalisation représentés sur les figures 2 à 8, l'élément d'accrochage 33, c'est-à-dire l'ergot, est couplé solidairement à l'organe de commande du générateur. Dans d'autres modes de réalisation, cet élément d'accrochage pourrait être couplé au rotor 26 par des moyens de couplage mobile, tels que des moyens d'entrainement de l'élément d'accrochage en rotation ou en translation.

Un avantage du dispositif de télécommande pour interrupteur selon l'invention est que la rotation du rotor lors du retour dans la position de repos est découplée par rapport au mouvement de l'organe de commande.

Un autre avantage du dispositif de télécommande pour interrupteur selon l'invention est qu'il permet la réalisation d'un sélecteur multifonction pour appareillage domotique ou pour toute autre application nécessitant plusieurs commandes sur une même interface. Ainsi, l'invention est adaptée pour la réalisation de dispositifs de télécommande permettant une commande à distance de luminaires, de volets roulants, de moyens de climatisation, ou d'une combinaison de moyens de régulation d'ambiance.

## Revendications

1. Dispositif de télécommande (1 ; 21 ; 81) pour interrupteur comportant :
- un organe de commande mobile (2 ; 22 ; 83) monté rotatif autour d'un axe de commande (23 ; 82) et pouvant être actionné dans au moins deux positions de commutation,
- un générateur d'électricité (3) équipé d'un stator (4 ; 25) et d'un rotor (5 ; 26) montés de façon coaxiale autour d'un axe du générateur (27 ; 82),
- un circuit électrique couplé au générateur pour produire un signal électrique de télécommande, et
- un mécanisme de couplage (7) entre l'organe de commande (2 ; 22 ; 83) et le rotor (5 ; 26) pour transformer le mouvement de l'organe de commande en rotation du rotor,
**caractérisé en ce que** le dispositif de télécommande (1 ; 21 ; 81) comporte en outre des premiers moyens de rappel (53 ; 54) permettant de contraindre le rotor dans une position de repos, et **en ce que** le mécanisme de couplage comporte au moins un élément d'accrochage (33 ; 86 ; 91, 92, 93) et une barre d'entraînement (34) présentant une première et une seconde extrémité (35, 36), la première extrémité de la barre d'entraînement et l'élément d'accrochage étant respectivement couplés au rotor et à l'organe de commande ou inversement, l'élément d'accrochage (33 ; 86 ; 91, 92, 93) coopérant avec la seconde extrémité de la barre d'entrainement de sorte que, lors de l'actionnement de l'organe de commande entre deux positions de commutation, l'élément d'accrochage et la seconde extrémité (35, 36) de la barre d'entrainement (34) sont successivement accrochés, entrainés par l'organe de commande et décrochés, en générant ainsi une rotation du rotor dans un sens et dans l'autre.

2. Dispositif selon la revendication 1, **caractérisé en ce que** le générateur d'électricité (3) est une machine à flux transverse.

3. Dispositif selon l'une des revendications 1 ou 2, **caractérisé en ce que** la première extrémité (35) de la barre d'entrainement (34) et l'élément d'accrochage (33 ; 86 ; 91, 92, 93) sont respectivement couplés au rotor (26) et à l'organe de commande (22 ; 83).

4. Dispositif selon l'une des revendications 1 à 3, **caractérisé en ce que** les premiers moyens de rappel permettant de contraindre le rotor dans une position de repos comportent deux ressorts (53, 54), chaque ressort présentant deux extrémités, une extrémité (55, 56) de chaque ressort étant accrochée à une partie (51) solidaire du rotor, les deux autres extrémités (59, 60) desdits ressorts étant accrochées sur une partie fixe du dispositif.

5. Dispositif selon l'une des revendications 1 à 4, **caractérisé en ce que** la barre d'entrainement (34) est une lame ressort.

6. Dispositif selon la revendication 5, **caractérisé en ce que** l'élément d'accrochage (33 ; 86 ; 91, 92, 93) est un ergot permettant un accrochage de la seconde extrémité (36) de la barre d'entrainement (34) par appui de celle-ci sur un côté de l'ergot.

7. Dispositif selon la revendication 6, **caractérisé en ce que** le mécanisme de couplage comporte une pièce de liaison (41 ; 84) montée rotative par rapport à l'axe de commande (23 ; 82) et présentant une première et une seconde face latérale, la première face latérale (42) portant l'organe de commande, la seconde face latérale (43 ; 85) portant l'ergot (33 ; 86 ; 91, 92, 93) disposé à distance par rapport à l'axe de commande (23 ; 82), l'ergot et la seconde extrémité (36) de la lame ressort (34) étant disposés de sorte que, lors de l'actionnement de l'organe de commande (22 ; 83) entre deux positions de commutation, la seconde extrémité de la lame ressort est successivement en butée avec l'ergot, entrainée par ledit ergot et l'organe de commande, et désengagée de l'ergot, en générant ainsi une rotation du rotor dans un sens et dans l'autre.

8. Dispositif selon la revendication 7, **caractérisé en ce que en ce que** l'organe de commande (22 ; 83) est monté basculant entre deux positions de commutation.

9. Dispositif selon la revendication 8, **caractérisé en ce que** le dispositif comporte des seconds moyens de rappel (71) de l'organe de commande (22 ; 83) dans une position de repos dudit organe.

10. Dispositif selon la revendication 7, **caractérisé en ce que** l'axe de commande (82) est sensiblement confondu avec l'axe du générateur d'électricité.

11. Dispositif selon la revendication 10, **caractérisé en ce que** l'organe de commande peut être actionné dans plus de deux positions de commutation (I, II, III, IV), et **en ce que** la seconde face latérale (85) de la pièce de liaison comporte une pluralité d'ergots (91, 92, 93) disposés sur un arc de cercle concentrique par rapport à l'axe de commande (82), chaque ergot coopérant avec la seconde extrémité (36) de la barre d'entrainement (34) lors de l'actionnement de l'organe de commande (83) entre deux positions de commutation déterminées.

12. Interrupteur comportant au moins un contact mobile (15) et un dispositif de télécommande (1) pour actionner ledit interrupteur, **caractérisé en ce que** le dispositif de télécommande est selon l'une des revendications précédentes, ledit contact mobile étant actionné à distance par ledit dispositif de télécommande.

13. Procédé de télécommande pour interrupteur comportant :
- l'actionnement en rotation d'un organe de commande mobile par rapport à un axe de commande entre au moins deux positions de commutation (101),
- l'entrainement d'un rotor d'un générateur d'électricité autour d'un axe dudit générateur par l'organe de commande (102),
- la génération d'électricité sur un stator dudit générateur (103), et
- la production d'un signal électrique de télécommande à partir de ladite électricité, **caractérisé en ce que** le procédé de télécommande comporte le rappel du rotor dans une position de repos (114), et **en ce que** ledit entrainement du rotor par l'organe de commande est réalisé par l'entremise d'une barre d'entrainement présentant une première et une seconde extrémité et un élément d'accrochage, ledit entrainement du rotor comportant, lorsque l'organe de commande est actionné entre deux positions de commutation, l'accrochage de la seconde extrémité et de l'élément d'accrochage (111), l'entrainement de la seconde extrémité et de l'élément d'accrochage par l'organe de commande (112) et le décrochage de la seconde extrémité et de l'élément d'accrochage (113), en générant ainsi une rotation du rotor dans un sens et dans l'autre.

## Claims

1. A remote control device (1 ; 21 ; 81) for a switch comprising:
- a movable control member (2 ; 22 ; 83) mounted rotating around a control axis (23 ; 82) and able to be actuated to at least two switching positions,
- an electricity generator (3) equipped with a stator (4 ; 25) and a rotor (5 ; 26) fitted in coaxial manner around an axis of the generator (27 ; 82),
- an electric circuit coupled to the generator to produce an electric remote control signal, and
- a coupling mechanism (7) between the control member (2 ; 22 ; 83) and rotor (5 ; 26) to transform the movement of the control member into rotation of the rotor, **characterized in that** the remote control device (1 ; 21 ; 81) further comprises first biasing means (53 ; 54) enabling the rotor to be biased to a rest position, and that the coupling mechanism comprises at least one latching component (33 ; 86 ; 91, 92, 93) and a drive bar (34) presenting a first and second end (35, 36), the first end of the drive bar and the latching component being respectively coupled to the rotor and to the control member or vice-versa, the latching component (33 ; 86 ; 91, 92, 93) operating in conjunction with the second end of the drive bar so that, when the control member is actuated between two switching positions, the latching component and the second end (35, 36) of the drive bar (34) are successively latched, driven by the control member and unlatched, thereby generating a rotation of the rotor in one direction and in the other.

2. The device according to claim 1, **characterized in that** the electricity generator (3) is a transverse flux machine.

3. The device according to one of claims 1 or 2, **characterized in that** the first end (35) of the drive bar (34) and the latching component (33 ; 86 ; 91, 92, 93) are respectively coupled to the rotor (26) and to the control member (22 ; 83).

4. The device according to any one of claims 1 to 3, **characterized in that** the first biasing means enabling the rotor to be biased to a rest position comprise two springs, each spring presenting two ends, one end (55, 56) of each spring being latched to a part (51) integral to the rotor, the other two ends (59, 60) of said springs being latched onto a fixed part of the device.

5. The device according to one of claims 1 to 4, **characterized in that** the drive bar (34) is a spring blade.

6. The device according to claim 5, **characterized in that** the latching component (33 ; 86 ; 91, 92, 93) is a spigot enabling the second end (36) of the drive bar (34) to be latched by pressing the latter on one side of the spigot.

7. The device according to claim 6, **characterized in that** the coupling mechanism comprises a link part (41 ; 84) mounted rotating with respect to the control axis (23 ; 82) and presenting a first and second lateral face, the first lateral face (42) supporting the control member, the second lateral face (43 ; 85) supporting the spigot (33 ; 86 ; 91, 92, 93) arranged at a distance with respect to the control axis (23 ; 82), the spigot and second end (36) of the spring blade (34) being arranged such that, when the control member (22 ; 83) is actuated between two switching positions, the second end of the spring blade is successively pressing against the spigot, driven by said spigot and the control member, and disengaged from the spigot, thereby generating a rotation of the rotor in one direction and in the other.

8. The device according to claim 7, **characterized in that** the control member (22 ; 83) is mounted rocking between two switching positions.

9. The device according to claim 8, **characterized in that** the device comprises second biasing means (71) of the control member (22 ; 83) to a rest position of said member.

10. The device according to claim 7, **characterized in that** the control axis (82) is substantially identical to the axis of the electricity generator.

11. The device according to claim 10, **characterized in that** the control member can be actuated in more than two switching positions (I, II, III, IV), and **in that** the second lateral face (85) of the link part comprises a plurality of spigots (91, 92, 93) arranged on an arc of a circle concentric with respect to the control axis (82), each spigot operating in conjunction with the second end (36) of the drive bar (34) when the control member (83) is actuated between two determined switching positions.

12. A switch comprising at least one movable contact (15) and a remote control device (1) to actuate said switch, **characterized in that** the remote control device is according to one of the foregoing claims, said movable contact being actuated remotely by said remote control device.

13. A remote control method for a switch comprising :
- actuation of a movable control member in rotation with respect to a control axis between at least two switching positions (101),
- driving of a rotor of an electricity generator around an axis of said generator by the control member (102),
- generation of electricity on a stator of said generator (103), and
- production of an electric remote control signal from said electricity,
**characterized in that** the remote control method comprises biasing of the rotor to a rest position (114), and **in that** said driving of the rotor by the control member is performed by means of a drive bar presenting a first and second end and a latching component, said driving of the rotor, when the control member is actuated between two switching positions, comprising latching of the second end and of the latching component (111), driving of the second end and of the latching component by the control member (112) and unlatching of the second end and of the latching component (113), thereby generating a rotation of the rotor in one direction and in the other.

## Patentansprüche

1. Fernbetätigungseinrichtung (1 ; 21 ; 81) für ein elektrisches Schaltgerät mit
- einem beweglichen Betätigungsorgan (2; 22; 83), das drehwirksam um eine Betätigungsachse (23; 82) montiert ist und in mindestens zwei Schaltstellungen verbracht werden kann,
- einem Stromerzeuger (3), der einen Stator (4; 25) und einen Rotor (5; 26) umfasst, welche koaxial um eine Achse des Stromerzeugers (27; 82) montiert sind,
- einem mit dem Stromerzeuger gekoppelten elektrischen Stromkreis zur Erzeugung eines elektrischen Fernbetätigungssignals sowie
- einer zwischen dem Betätigungsorgan (2; 22; 83) und dem Rotor (5; 26) angeordneten Kupplungsvorrichtung (7) zur Umwandlung der Bewegung des Betätigungsorgans in eine Drehung des Rotors,
**dadurch gekennzeichnet, dass** die Fernbetätigungseinrichtung (1; 21; 81) außerdem erste Rückstellmittel (53; 54) umfasst, mit denen der Rotor in Richtung einer Ruhestellung beaufschlagt werden kann, sowie dadurch, dass die Kupplungsvorrichtung mindestens ein Mitnehmerelement (33; 86; 91, 92, 93) und eine Antriebsstange (34) mit einem ersten und einem zweiten Ende (35, 36) umfasst, wobei das erste Ende der Antriebsstange mit dem Rotor und das Mitnehmerelement mit dem Betätigungsorgan bzw. umgekehrt gekoppelt sind und das Mitnehmerelement (33; 86; 91, 92, 93) mit dem zweiten Ende der Antriebsstange derart zusammenwirkt, dass bei Verschiebung des Betätigungsorgans zwischen zwei Schaltstellungen das Mitnehmerelement und das zweite Ende (35, 36) der Antriebsstange (34) in Eingriff gelangen, durch das Betätigungsorgan mitgeführt und wieder gelöst werden, wodurch eine Drehung des Rotors in der einen bzw. der anderen Richtung bewirkt wird.

2. Einrichtung nach Anspruch 1, **dadurch gekennzeichnet, dass** der Stromerzeuger (3) als Axialflussmaschine ausgebildet ist.

3. Einrichtung nach einem der Ansprüche 1 oder 2, **dadurch gekennzeichnet, dass** das erste Ende (35) der Antriebsstange (34) und das Mitnehmerelement (33; 86; 91, 92, 93) jeweils mit dem Rotor (26) bzw. dem Betätigungsorgan (22; 83) gekoppelt sind.

4. Einrichtung nach irgendeinem der Ansprüche 1 bis 3, **dadurch gekennzeichnet, dass** die zur Beaufschlagung des Rotors in Richtung einer Ruhestellung dienenden ersten Rückstellmittel zwei Federn (53, 54) mit jeweils zwei Enden umfassen, wobei eines der Enden (55, 56) jeder Feder an einem fest mit dem Rotor verbundenen Teil (51) und die beiden anderen Enden (59, 60) der genannten Federn an einem ortsfesten Teil der Einrichtung befestigt sind.

5. Einrichtung nach irgendeinem der Ansprüche 1 bis 4, **dadurch gekennzeichnet, dass** die Antriebsstange (34) als Federblatt ausgebildet ist.

6. Einrichtung nach Anspruch 5, **dadurch gekennzeichnet, dass** das Mitnehmerelement (33; 86; 91, 92, 93) als Zapfen ausgebildet ist, der durch Anlage der Antriebsstange (34) an einer Seite des Zapfens mit dem zweiten Ende (36) dieser Stange in Eingriff gebracht werden kann.

7. Einrichtung nach Anspruch 6, **dadurch gekennzeichnet, dass** die Kupplungsvorrichtung ein Verbindungsteil (41; 84) umfasst, das drehwirksam um die Betätigungsachse (23; 82) herum montiert ist und eine erste sowie eine zweite Seitenfläche umfasst, an welcher ersten Seitenfläche (42) das Betätigungsorgan und an welcher zweiten Seitenfläche (43; 85), distant zur Betätigungsachse (23; 82), der Zapfen (33; 86; 91, 92, 93) ausgebildet ist, wobei der Zapfen und das zweite Ende (36) des Federblatt (34) so angeordnet sind, dass bei Verschiebung des Betätigungsorgans (22; 83) zwischen zwei Schaltstellungen das zweite Ende des Federblatts zunächst am Zapfen anliegt, dann vom genannten Zapfen und dem Betätigungsorgan mitgeführt wird und sich schließlich wieder vom Zapfen löst, wodurch eine Drehung des Rotors in der einen bzw. der anderen Richtung bewirkt wird.

8. Einrichtung nach Anspruch 7, **dadurch gekennzeichnet, dass** das Betätigungsorgan (22; 83) zwischen zwei Schaltstellungen verschwenkt werden kann.

9. Einrichtung nach Anspruch 8, **dadurch gekennzeichnet, dass** die Einrichtung zweite Rückstellmittel (71) zur Beaufschlagung des Betätigungsorgans (22; 83) in Richtung einer Ruhestellung des genannten Organs umfasst.

10. Einrichtung nach Anspruch 7, **dadurch gekennzeichnet, dass** die Betätigungsachse (82) annähernd mit der Achse des Stromerzeugers übereinstimmt.

11. Einrichtung nach Anspruch 10, **dadurch gekennzeichnet, dass** das Betätigungsorgan in mehr als zwei Schaltstellungen (I, II, III, IV) verbracht werden kann und dass an der zweiten Seitenfläche (85) des Verbindungsteils mehrere Zapfen (91, 92, 93) ausgebildet und in einem Kreisbogen konzentrisch zur Betätigungsachse (82) angeordnet sind, derart dass jeder Zapfen beim Verschieben des Betätigungsorgans (83) zwischen zwei bestimmten Schaltstellungen mit dem zweiten Ende (36) der Antriebsstange (34) zusammenwirkt.

12. Elektrisches Schaltgerät mit mindestens einem beweglichen Kontakt (15) sowie einer Fernbetätigungseinrichtung (1) zur Betätigung des genannten Schaltgeräts, **dadurch gekennzeichnet, dass** die Fernbetätigungseinrichtung nach einem der vorhergehenden Ansprüche ausgebildet ist und die Fernbetätigung des genannten beweglichen Kontakts durch die genannte Fernbetätigungseinrichtung erfolgt.

13. Fernbetätigungsverfahren für ein elektrisches Schaltgerät, welches Verfahren:
□ die drehwirksame Verschiebung eines beweglichen Fernbetätigungsorgans in Bezug zu einer Betätigungsachse zwischen mindestens zwei Schaltstellungen (101),
□ die durch das Betätigungsorgan (102) bewirkte Mitführung des Rotors eines Stromerzeugers um eine Achse des genannten Stromerzeugers,
□ die Erzeugung eines elektrischen Stromes im Stator des genannten Stromerzeugers (103) sowie
□ die Verwendung des genannten elektrischen Stroms zur Erzeugung eines elektrischen Fernbetätigungssignals umfasst,
**dadurch gekennzeichnet, dass** das Fernbetätigungsverfahren die Rückführung des Rotors in eine Ruhestellung (114) umfasst und dass die genannte, durch das Fernbetätigungsorgan bewirkte Mitführung des Rotors mithilfe einer Antriebsstange mit einem ersten und einem zweiten Ende sowie eines Mitnehmerelements erfolgt, wobei die genannte Mitführung des Rotors bei der Verschiebung des Betätigungselements zwischen zwei Schaltstellungen die Eingriffnahme des zweiten Endes und des Mitnehmerelements (111), die Mitführung des zweiten Endes und des Mitnehmerelements durch das Betätigungsorgan (112) sowie das Lösen des zweiten Endes und des Mitnehmerelements (113) umfasst, wodurch die Drehung des Rotors in der einen oder der anderen Richtung bewirkt wird.
